# EUROPÄISCHE PATENTSCHRIFT

(11) **EP 1 964 635 B1**
(45) Veröffentlichungstag und Bekanntmachung des Hinweises auf die Patenterteilung: **01.05.2013**
(21) Anmeldenummer: 07023712.8
(22) Anmeldetag: 07.12.2007
(51) Int. Cl.: B23D 49/16, B23D 51/10

(54) **Hubsäge, insbesondere Stichsäge**
Hacksaw, in particular jig saw
Scie à métaux, en particulier scie sauteuse

(30) Priorität: 01.03.2007 DE 102007009943
(43) Veröffentlichungstag der Anmeldung: 03.09.2008
(73) Patentinhaber: Festool Group GmbH & Co. KG, 73240 Wendlingen am Neckar (DE)
(72) Erfinder: Barth,Volker, 73732 Esslingen (DE); Reuss, Torsten, 73265 Dettingen unter Teck (DE)
(74) Vertreter: Bregenzer, Michael

(56) Entgegenhaltungen:
- EP-A1- 1 468 771
- EP-A1- 1 518 629

## Beschreibung

Die Erfindung betrifft eine Hubsäge, insbesondere Stichsäge, mit einer beim Betrieb eine hin und her gehende Hubbewegung ausführenden Hubstange, an deren unterem Ende eine Spanneinrichtung zum lösbaren Festspannen des Einspannschaftes eines im befestigten Zustand unten aus der Spanneinrichtung vorstehenden Sägeblattes angeordnet ist, das von unten her in Längsrichtung in die Spanneinrichtung einsteckbar und nach unten hin aus der Spanneinrichtung entnehmbar ist gemäß dem Oberbegriff des Anspruchs 1.

Eine derartige Hubsäge ist z.B. in EP 1 518 629 A1 beschrieben.

Ausgehend von einer Hubsäge dieser Art besteht die Aufgabe der vorliegenden Erfindung darin, die Spanneinrichtung so auszubilden, dass das Einsetzen und Entnehmen des Sägeblattes auf in der Handhabung möglichst einfache Weise werkzeuglos erfolgt. Dabei soll der konstruktive Aufbau möglichst einfach und kostengünstig zu verwirklichen und die Spanneinrichtung unanfällig gegen Funktionsstörungen sein.

Diese Aufgabe wird durch eine Hubsäge gemäß der technischen Lehre des Anspruchs 1 gelöst. Es ist vorgesehen, dass die Spanneinrichtung eine beweglich gelagerte, seitlich gegen den Einspannschaft spannbare Spannbackenanordnung, eine der Spannbackenanordnung außen benachbarte, mit der Spannbackenanordnung zusammenwirkende Keilelementanordnung, eine erste Federeinrichtung, deren Federkraft das eingesetzte Sägeblatt nach unten hin beaufschlagt, und eine zweite Federeinrichtung, deren Federkraft die Keilelementanordnung nach unten hin beaufschlagt, enthält, wobei die Keilelementanordnung in Drehmitnahmeverbindung mit der Spannbackenanordnung steht und von außen her zwischen einer unteren, die Spannbackenanordnung nach innen gegen den Einspannschaft spannenden Spannstellung und einer oberen, die Spannbackenanordnung freigebenden Freigabestellung, in der die Keilelementanordnung eine mit Bezug auf die Spannstellung verdrehte Drehlage einnimmt und an einer feststehenden, die Keilelementanordnung in der Freigabestellung haltenden Haltefläche aufsitzt, bewegbar ist und wobei eine feststehende Anschlagfläche vorhanden ist, der eine Anschlaganordnung am Einspannschaft zugeordnet ist, so dass bei eingespanntem Einspannschaft die Anschlaganordnung durch die erste Federeinrichtung nach unten hin gegen die Anschlagfläche gehalten wird und bei in der verdrehten Freigabestellung befindlicher Keilelement- und Spannbackenanordnung der Einspannschaft an der Anschlagfläche vorbei bewegt werden kann.

Zum Einsetzen des Sägeblattes wird die Keilelementanordnung entgegen der Federkraft der zweiten Federeinrichtung in ihre verdrehte Freigabestellung überführt. Sodann steckt man das Sägeblatt in entsprechend gedrehter Lage mit seinem Einspannschaft in die Spannbackenanordnung, wonach der Benutzer das aus der Spanneinrichtung vorstehende Sägeblatt etwas verdrehen muss, so dass der Einspannschaft von der feststehend angeordneten Haltefläche freikommt und die zweite Federeinrichtung die Keilelementanordnung nach unten in die Spannstellung drückt, in der die Keilelementanordnung die Spannbackenanordnung gegen das Sägeblatt spannt, so dass dieses seine festgespannte Arbeitsstellung einnimmt. Dabei wird der Einspannschaft des Sägeblattes durch die erste Federeinrichtung in Sägeblatt-Längsrichtung fest gegen die feststehende Anschlagfläche gehalten.

Alle diese Vorgänge laufen mit Ausnahme des Überführens der Keilelementanordnung in die Freigabestellung und das Verdrehen des Sägeblattes selbsttätig ab, so dass eine denkbar einfache Handhabung vorliegt.

Zum Entnehmen des Sägeblattes wird die Keilelementanordnung wiederum in die Freigabestellung bewegt, wobei die Spannbakkenanordnung mit dem Sägeblatt die Drehbewegung mitmacht, so dass die Spannbackenanordnung das Sägeblatt freigibt und das Sägeblatt durch die Federkraft der ersten Federeinrichtung an der feststehenden Anschlagfläche vorbei ausgestoßen wird.

Die erfindungsgemäße Spanneinrichtung ist ferner verhältnismäßig teilearm und weist einen unkomplizierten Aufbau auf.

Zweckmäßige Ausgestaltungen der Erfindung sind in den Unteransprüchen angegeben.

Nachstehend wird ein Ausführungsbeispiel der Erfindung anhand der Zeichnung im einzelnen erläutert. Es zeigen:

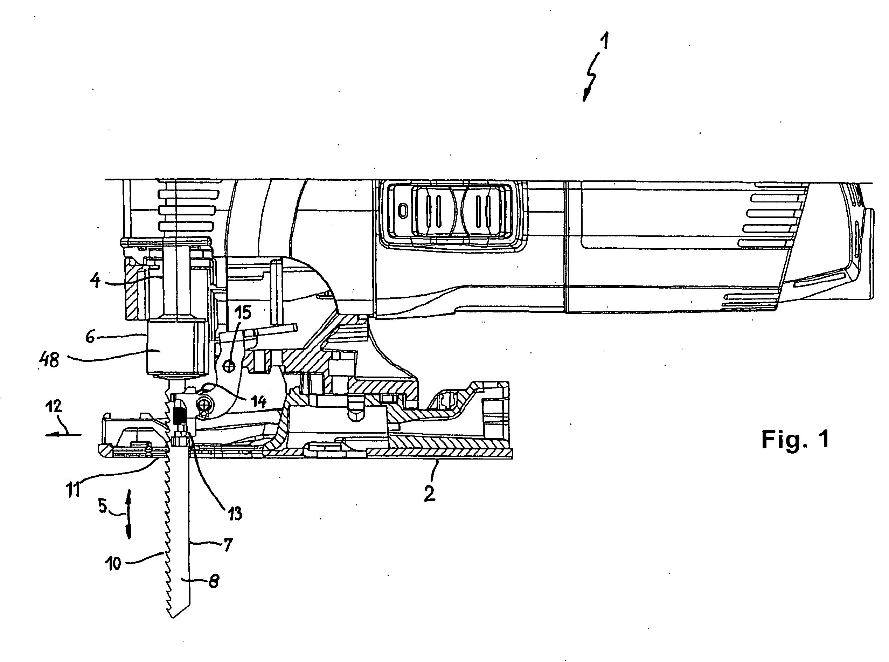

- Figur 1: eine erfindungsgemäße Hubsäge in Gestalt einer Stichsäge in abgeschnittener Seitenansicht, teilweise im Längsschnitt,
- Figur 2: die Hubstange mit der Spanneinrichtung und einem eingesetzten Sägeblatt in gesonderter Darstellung in Schrägansicht von unten,
- Figur 3: die Anordnung nach Figur 2 in Schrägansicht von oben,
- Figuren 4 und 5: die Anordnung nach den Figuren 2 und 3 in Stirnansicht von unten her gemäß Pfeil IV gesehen, wobei in Figur 4 die nicht sichtbare Keilelementanordnung und die Spannbackenanordnung in die Freigabestellung verdreht sind, so dass das eingesteckte Sägeblatt eine entsprechende Drehlage einnimmt, während sich das Sägeblatt in Figur 5 in seiner Arbeitsstellung befindet, d.h. die nicht sichtbare Keilelementanordnung und die Spannbackenanordnung befinden sich in der Spannstellung,

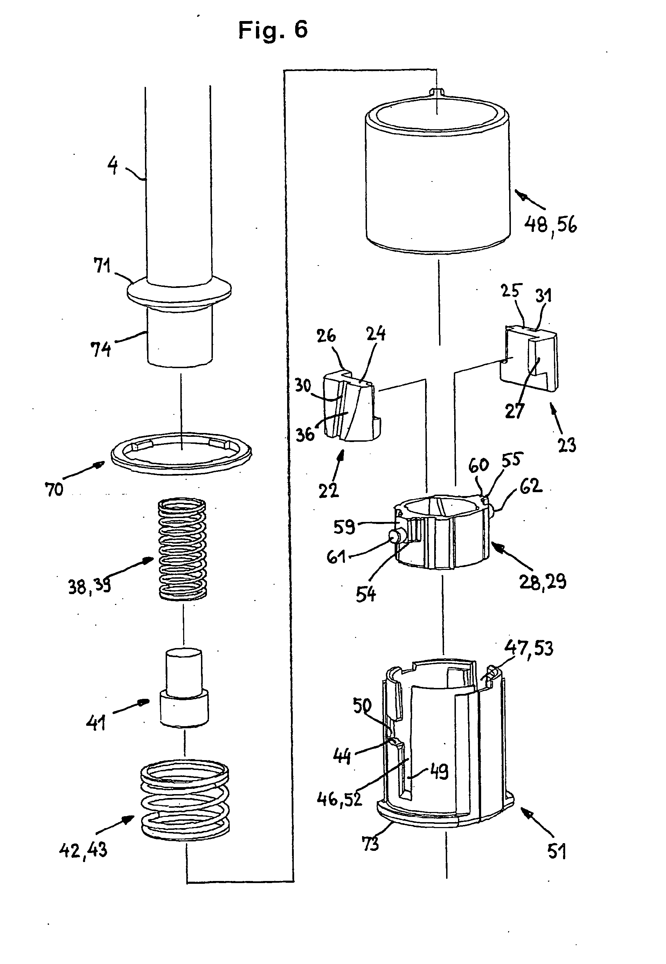

- Figur 6: die Spanneinrichtung in explodierter Darstellungsweise,

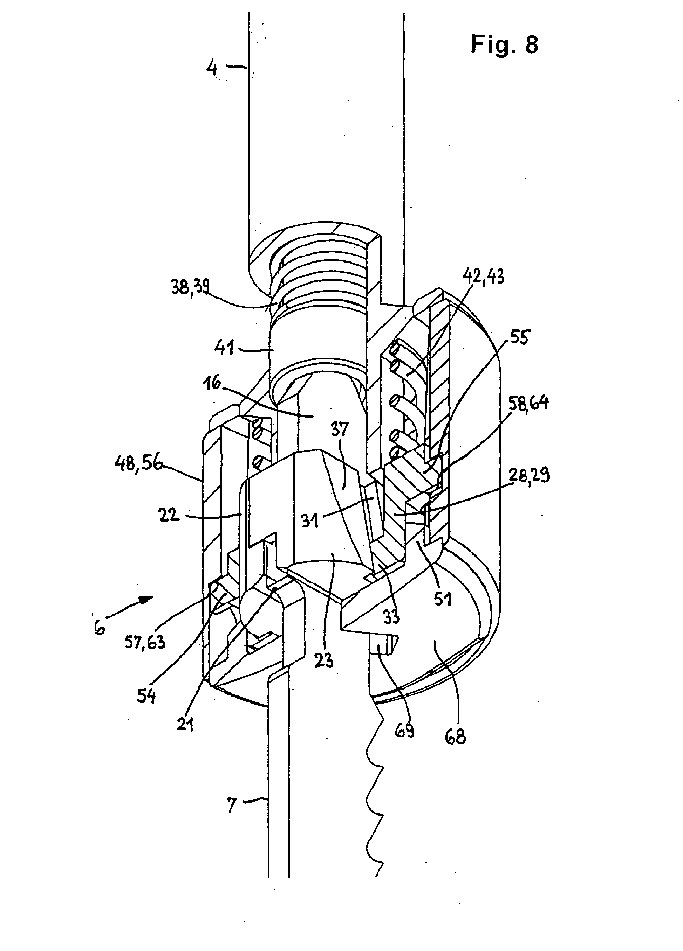

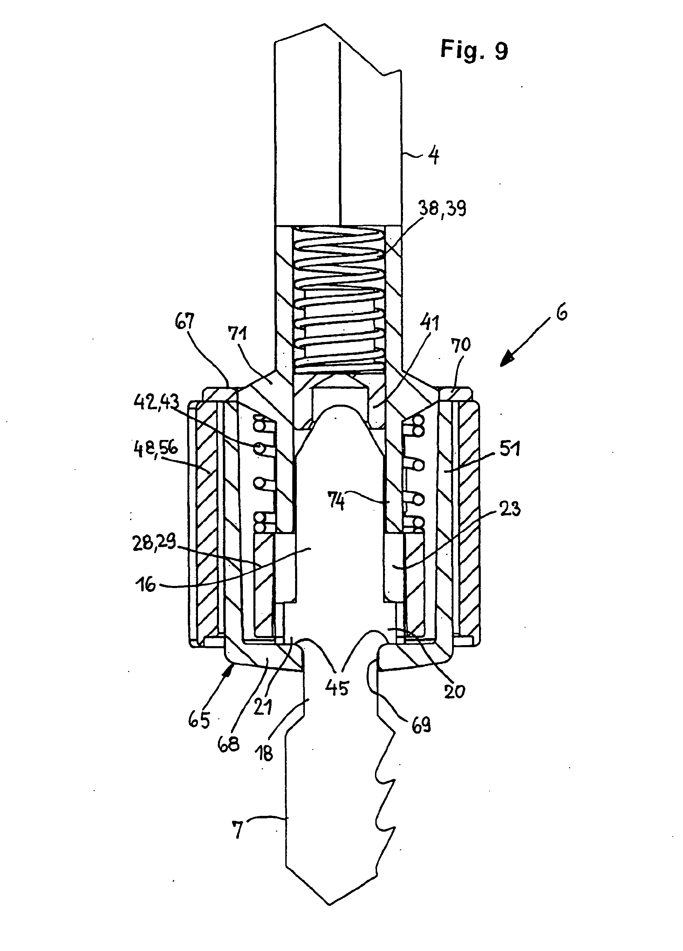

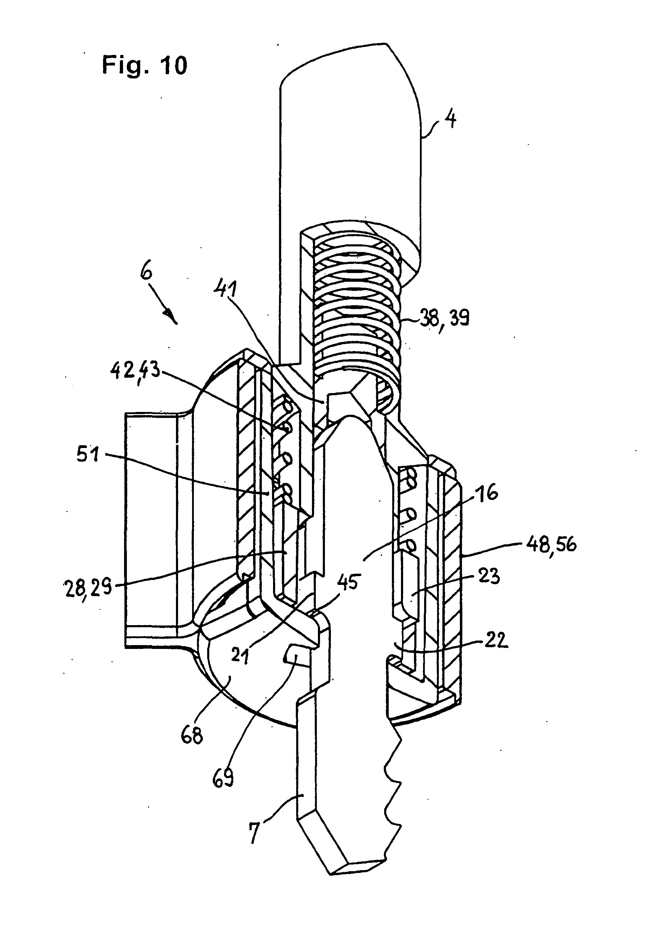

- Figuren 7 bis 12: die Spanneinrichtung in verschiedenen Längsschnitten, wobei sich die Keilelementanordnung in der Spannstellung und das Sägeblatt somit in seiner Arbeitsstellung befindet,
- Figur 13: die Spanneinrichtung mit geschnitten dargestellter Betätigungshülse, so dass die Spanneinrichtung ansonsten in Seitenansicht erscheint, wobei sich die Keilelementanordnung in ihrer Freigabestellung befindet, in der das Sägeblatt eingesteckt bzw. entnommen werden kann, und
- Figur 14: die Anordnung nach Figur 13, wobei sich die Keilelementanordnung jedoch in der Spannstellung und das Sägeblatt somit in seiner Arbeitsstellung befindet.

Die aus der Zeichnung hervorgehende Stichsäge 1 weist einen Sägetisch 2 auf, mit dem die Stichsäge auf das zu sägende Werkstück (nicht dargestellt) aufgelegt wird. Die Stichsäge 1 besitzt ferner oberhalb des Sägetisches 2 eine Antriebseinheit 3, die in üblicher Weise einen Antriebsmotor und ein Getriebe enthält, über das beim Betrieb eine Hubstange 4 zu einer periodisch hin und her gehenden Hubbewegung in Richtung gemäß Doppelpfeil 5 angetrieben wird. Am unteren Ende der Hubstange 4 ist eine Spanneinrichtung 6 angeordnet, die zum lösbaren Festspannen eines im befestigten Zustand unten aus der Spanneinrichtung 6 vorstehenden und die Hubbewegung mitmachenden Sägeblattes 7 dient, das eine längliche Gestalt mit zwei zueinander parallelen Flachseiten 8, 9 aufweist und an seiner Vorderseite 10 zur sägenden Bearbeitung des Werkstücks ausgebildet ist und hierzu, wie dargestellt, eine Sägezahnreihe trägt.

Die Stichsäge 1 ist als Handgerät ausgebildet und kann vom Benutzer am Gehäuse der Antriebseinheit 3 ergriffen werden.

Das Sägeblatt 7 ist am vorderen Endbereich der Stichsäge 1 angeordnet und erstreckt sich im Wesentlichen rechtwinkelig zum Sägetisch 2 nach unten bis unterhalb des Sägetisches 2, der im Bereich des Sägeblattes 7 eine nach vorne hin offene Tischausnehmung 11 für den Durchtritt des Sägeblattes 7 enthält. Schiebt man die Stichsäge 1 über das betreffende Werkstück in Vorschubrichtung 12 nach vorne, sägt das auf und abgehende Sägeblatt 7 einen Sägeschnitt in das Werkstück.

Unterhalb der Spanneinrichtung 6 ist ein vorliegend nicht weiter interessierender Führungshalter 13 an der Stichsäge 1 angeordnet, der den beiden Flachseiten 8, 9 des Sägeblattes 7 zugeordnete Führungselemente trägt, die das Sägeblatt 7 seitlich stabilisieren.

Ferner weist die Stichsäge 1 des Ausführungsbeispiels eine an der Rückseite des Sägeblattes 7 anliegende Pendelrolle 14 auf, die das Sägeblatt 7 nach hinten hin abstützt und eine zur Hubbewegung des Sägeblattes 7 synchrone Pendelbewegung um eine Pendelachse 15 ausführt, so dass der Hubbewegung des Sägeblattes 7 eine Pendelkomponente überlagert wird.

Zum allgemeinen Aufbau der Stichsäge 1 wird schließlich noch darauf hingewiesen, dass die Antriebseinheit 3 so auf dem Sägetisch 2 angeordnet ist, dass sie um die Vorschubrichtung 12 verschwenkt und in der jeweiligen Schwenkstellung festgestellt werden kann. Die Antriebseinheit 3 und mit dieser das Sägeblatt 7 können somit nach der einen oder anderen Seite hin verschwenkt werden, so dass das Sägeblatt 7 schräg zum Werkstück ausgerichtet ist und an diesem einen entsprechenden Schrägschnitt, beispielsweise einen Gehrungsschnitt anbringt.

Der Führungshalter 13, die Pendelrolle 14 und die verschwenkbare Lagerung der Antriebseinheit 3 können auch fehlen oder anders ausgebildet sein.

Der obere Endbereich des Sägeblattes 7 bildet einen Einspannschaft 16, mit dem das Sägeblatt 7 in die Spanneinrichtung 6 eingespannt wird.

Mit "oben" ist vorliegend "dem zu sägenden Werkstück abgewandt" und mit "unten" "dem zu sägenden Werkstück zugewandt" gemeint.

Der Einspannabschnitt 16 hat die bei Sägeblättern übliche Gestalt. An den mit der Sägezahnreihe versehenen Bereich des Sägeblattes schließt sich ein schmälerer Halsbereich 18 an, an dem mit Abstand zum die Sägezahnreihe aufweisenden Sägeblattbereich eine Anschlaganordnung angeordnet ist, die von zwei an der Sägeblatt-Vorderseite und der Sägeblatt-Rückseite abstehenden Anschlagvorsprüngen 20, 21 gebildet wird.

Das Sägeblatt 7 kann in Längsrichtung 17 (diese entspricht der Längsrichtung des Sägeblattes und somit auch der Richtung 5 der Hubbewegung) von unten her in die Spanneinrichtung 6 eingesteckt und nach unten hin aus der Spanneinrichtung 6 entnommen werden.

Die vorliegende Erfindung beschäftigt sich mit der Spanneinrichtung 6. Sie enthält eine beweglich gelagerte, seitlich gegen die Flachseiten 8, 9 des Einspannschaftes 16 spannbare Spannbackenanordnung, die zweckmäßigerweise zwei von entgegengesetzten Seiten her gegen die Flachseiten 8, 9 des zwischen die beiden Spannbacken eingesetzten Einspannschaftes 16 spannbare Spannbacken aufweist. Dabei weisen die beiden Spannbacken 22, 23 jeweils zusätzlich zu ihrer der betreffenden Sägeblatt-Flachseite 8, 9 zugeordneten Spannpartie 24, 25 einen L-artig von dieser abstehenden Steg 26, 27 auf, der der Rückseite bzw. der Vorderseite des Einspannschaftes 16 zugeordnet ist. Auf diese Weise bilden die beiden Spannpartien 24, 25 zusammen mit den beiden Stegen 26, 27 eine rechteckige Aufnahme für den Einspannschaft 16.

Es ist ersichtlich, dass der eingesteckte Einspannschaft 16 in Drehmitnahmeeingriff mit den beiden Spannbacken 22, 23 steht.

Der Spannbackenanordnung 22, 23 ist eine ihr außen benachbarte und mit der Spannbackenanordnung 22, 23 zusammenwirkende Keilelementanordnung 28 zugeordnet, die zweckmäßigerweise von einer die Spannbackenanordnung 22, 23 umschließenden Innenhülse 29 gebildet wird. Dabei steht die Keilelementanordnung 28 in Drehmitnahmeverbindung, zweckmäßigerweise in Drehmitnahmeeingriff, mit der Spannbackenanordnung 22, 23, so dass sich die Keilelementanordnung 28 zusammen mit der Spannbakkenanordnung 22, 23 und dem eingesteckten Sägeblatt 7 verdrehen lässt.

Die die Keilelementanordnung 28 bildende Innenhülse 29 ist ferner in Längsrichtung 17 verschiebbar gelagert. In ihrer dargestellten unteren Spannstellung wirkt die Innenhülse 29 gegen die Spannbackenanordnung 22, 23 und spannt diese nach innen gegen den Einspannschaft 16 des Sägeblattes 7. Verschiebt man die Innenhülse 29 nach oben, wird die Spannbakkenanordnung 22, 23 nicht mehr gegen den Einspannschaft 16 gedrückt, so dass die Spannbacken 22, 23 sozusagen lose angeordnet sind und der Einspannschaft 16 nicht mehr festgespannt ist. Die die Keilelementanordnung 28 bildende Innenhülse 29 lässt sich vom Benutzer in noch zu beschreibender Weise von außen her bewegen.

Die Innenhülse 29 und die Spannbackenanordnung 22, 23 stehen, wie bereits erwähnt, in Drehmitnahmeeingriff miteinander. Dabei ist die Innenhülse 29 unter Beibehaltung des Drehmitnahmeeingriffs in Längsrichtung 17 relativ zur Spannbackenanordnung 22, 23 bewegbar. Dies wird beim Ausführungsbeispiel dadurch erreicht, dass jeder Spannbacken 22, 23 an seiner Außenseite eine in Längsrichtung 17 verlaufende Längsnut 30, 31 aufweist, in den ein an der Innenhülse 29 angeordneter Mitnahmevorsprung 32, 33 eingreift. Die Anordnung könnte prinzipiell auch umgekehrt so sein, dass die Längsnuten an der Innenhülse 29 und die Mitnahmevorsprünge an den Spannbacken 22, 23 angeordnet sind.

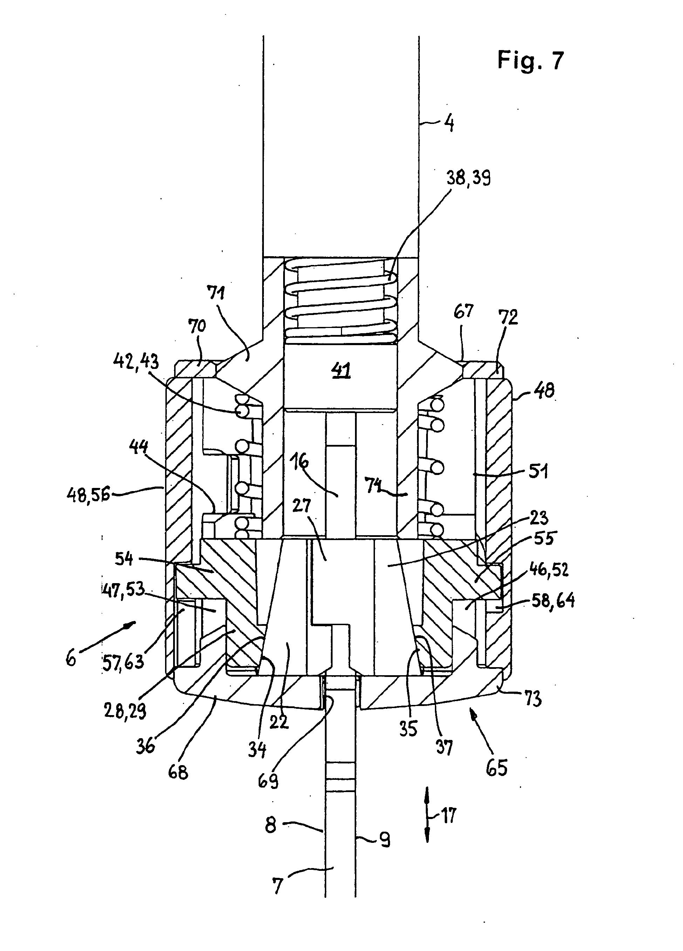

Die die Keilelementanordnung 28 bildende Innenhülse 29 und die Spannbackenanordnung 22, 23 weisen einander zugeordnete Keilflächen 34, 35, 36, 37 auf, über die die Spannkraft aufgebracht wird. Die Keilflächen 34, 35, 36, 37 verlaufen in Längsrichtung 17 mit nach innen gerichteter Neigung nach oben, wie insbesondere aus Figur 7 hervorgeht. Die beiden Keilflächen 34, 35 am Innenumfang der Innenhülse 29 sind einander entgegengesetzt und sind jeweils der Keilfläche 36, 37 am Außenumfang des betreffenden Spannbackens 22, 23 benachbart.

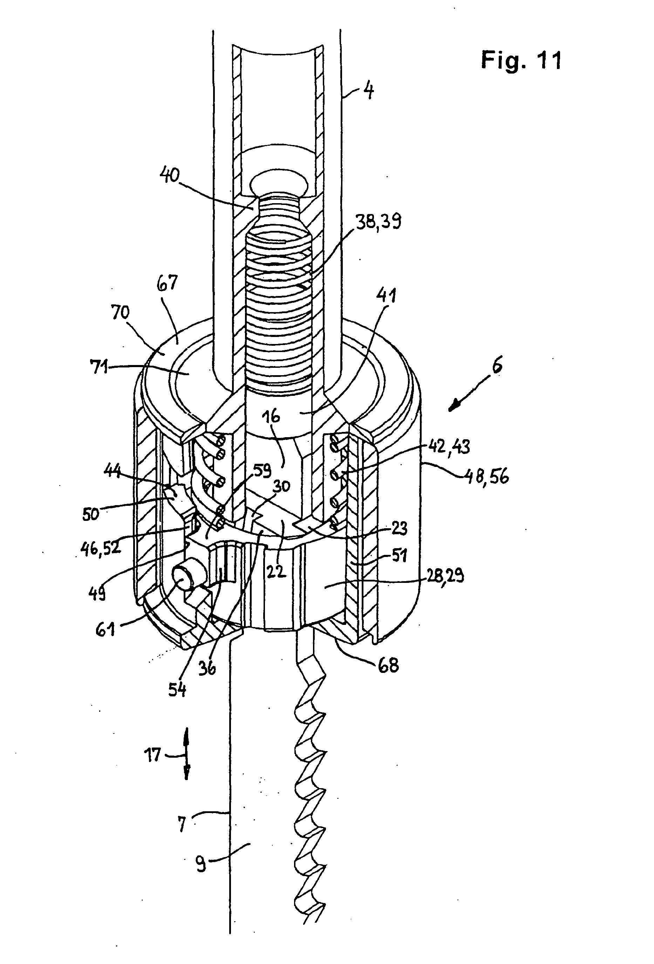

Die Spanneinrichtung 6 enthält des Weiteren eine erste Federeinrichtung 38, deren Federkraft das eingesetzte Sägeblatt 7 nach unten hin beaufschlagt. Dabei wird die erste Federeinrichtung 38 zweckmäßigerweise von einer Schraubenfeder 39 gebildet. Die Schraubenfeder 39 kann, wie dargestellt, in der Hubstange 4 gelagert sein und sich einerseits gegen die Hubstange 4, beispielsweise an einem Abstützabsatz 40 in der Hubstange 4 (siehe Figur 11) und andererseits an einem stirnseitig gegen das eingesetzte Sägeblatt 7 wirkenden Druckstück 41 abstützen.

Des Weiteren ist eine zweite Federeinrichtung 42 vorhanden, deren Federkraft die Keilelementanordnung 28, d.h. beim Ausführungsbeispiel die Innenhülse 29, nach unten hin beaufschlagt. Die zweite Federeinrichtung 42 kann ebenfalls von einer Schraubenfeder 43 gebildet werden.

Die die Keilelementanordnung 28 bildende Innenhülse 29 wird somit durch die zweite Federeinrichtung 42 in ihrer unteren Spannstellung gehalten. Das Bewegen der Innenhülse 29 nach oben erfolgt entgegen der Federkraft der zweiten Federeinrichtung 42. Damit die Innenhülse 29 selbsttätig in ihrer oberen, die Spannbackenanordnung 22, 23 freigebenden Freigabestellung hält, weist die Spanneinrichtung 6 eine feststehend an ihr angeordnete Haltefläche 44 auf, an der die Innenhülse 29 nach einem Verdrehen in Umfangsrichtung aufsitzt. Die Innenhülse 29 wird also zum Lösen der Spannbacken 22, 23 nicht nur in Längsrichtung 17 bewegt sondern auch verdreht, so dass die Innenhülse 29 in der Freigabestellung eine mit Bezug auf die Spannstellung verdrehte Drehlage einnimmt und dabei an der Haltefläche 44 aufsitzt, so dass die Innenhülse 29 an einer Bewegung in Längsrichtung nach unten gehindert wird.

Der von den beiden Anschlagvorsprüngen 20, 21 des Einspannschaftes 16 gebildeten Anschlaganordnung ist eine feststehend an der Spanneinrichtung 6 angeordnete Anschlagfläche 45 zugeordnet, so dass bei eingespanntem Einspannschaft 16 die Anschlagvorsprünge 20, 21 durch die erste Federeinrichtung 38 nach unten hin gegen die Anschlagfläche 45 gehalten werden, so dass das Sägeblatt 7 nicht nur durch die Spannbacken 22, 23 sondern in Längsrichtung 17 zusätzlich fixiert ist. Befinden sich die Innenhülse 29 und die Spannbackenanordnung 22, 23 dagegen in der oberen, verdrehten Freigabestellung, können die Anschlagvorsprünge 20, 21 des Einspannschaftes 16 an der feststehenden Anschlagfläche 45 in Längsrichtung vorbeibewegt werden, so dass das Sägeblatt 7 eingesteckt oder entnommen werden kann.

Mit den bis jetzt erläuterten Maßnahmen lässt sich die Funktionsweise wie folgt beschreiben:

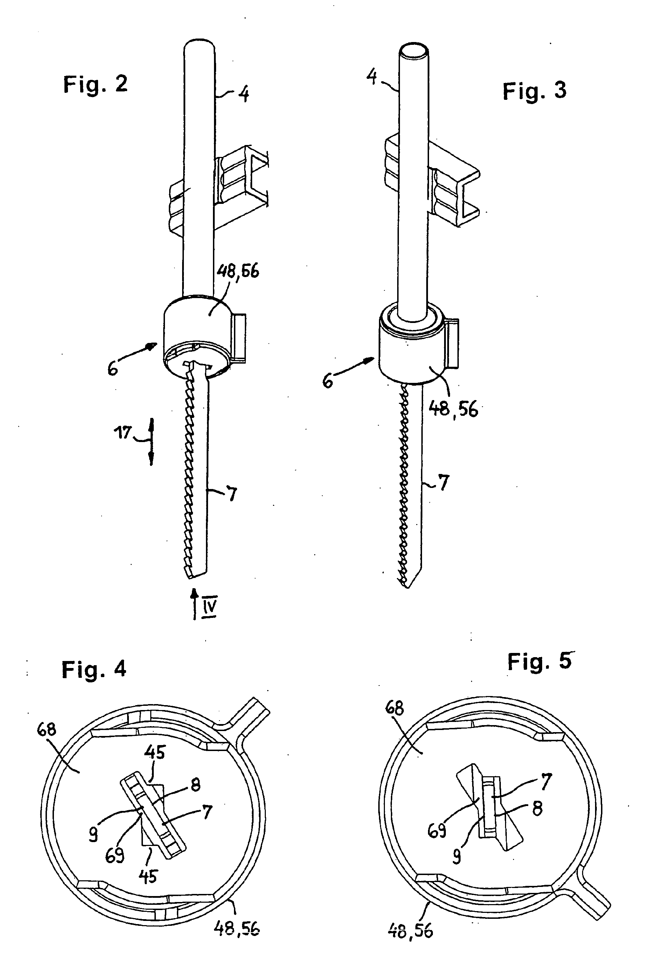

Will man ein Sägeblatt in die Spanneinrichtung 6 einsetzen und in dieser festspannen, überführt man die die Keilelementanordnung 28 bildende Innenhülse 29 in ihre obere, mit Bezug auf die untere Spannstellung verdrehte Freigabestellung, in der sie durch die feststehende Haltefläche 44 gehalten wird. Beim Bewegen der Innenhülse 29 in ihre Freigabestellung wird die zweite Federeinrichtung 42 gespannt. Sodann führt man das Sägeblatt 7 in entsprechend gedrehter Lage von unten her in die Spanneinrichtung 6 und dabei zwischen die Spannbacken 22, 23 ein (siehe Figur 4). Bei diesem Einstecken bewegen sich die Anschlagvorsprünge 20, 21 des Einspannschaftes 16 an der Anschlagfläche 45 vorbei. Sodann verdreht der Benutzer das Sägeblatt in die der Spannstellung entsprechenden Drehlage. Dabei kommt die Innenhülse 29 von der Haltfläche 44 frei, so dass sie sich selbsttätig unter der Kraft der zweiten Federeinrichtung 42 selbsttätig nach unten in die Spannstellung bewegt, so dass der Einspannschaft 16 des Sägeblattes 7 durch die Spannbacken 22, 23 festgespannt wird. Das Sägeblatt 7 nimmt dann seine Arbeitsstellung ein, in der seine Anschlagvorsprünge 20, 21 unter der Kraft der das Sägeblatt in Längsrichtung beaufschlagenden ersten Federeinrichtung 38 gegen die feststehende Anschlagfläche 45 gehalten werden.

Zur Entnahme des Sägeblattes 7 bewegt man die Innenhülse 29 von außen her in ihre Freigabestellung, in der das Sägeblatt 7 nicht nur von den Spannbacken 22, 23 sondern auch von der Anschlagfläche 45 freikommt und unter der Kraft der ersten Federeinrichtung 38 nach unten hin ausgestoßen wird.

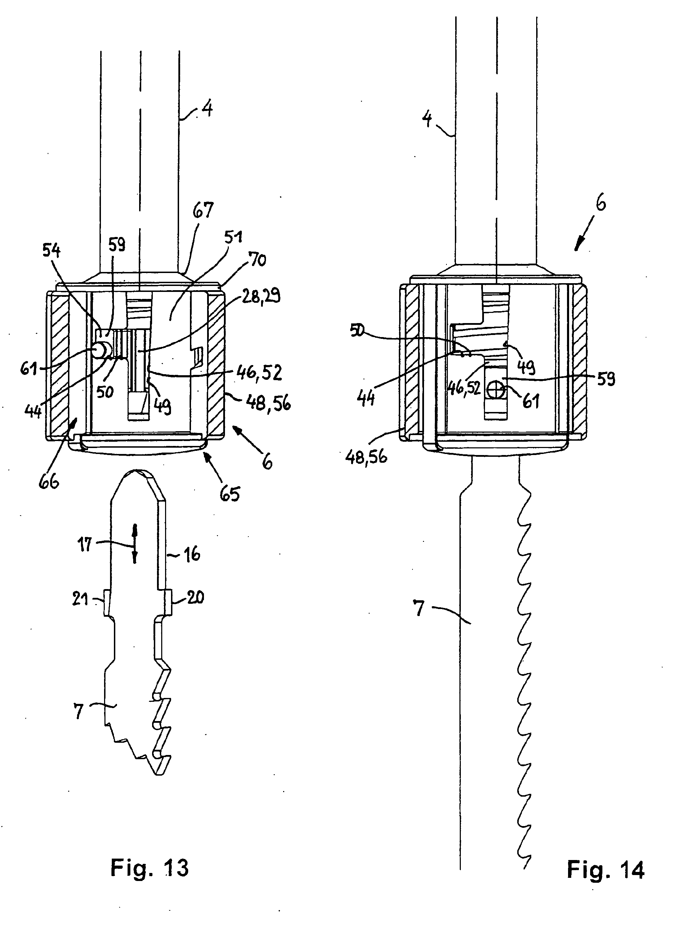

Der Bewegungsweg der Innenhülse 29 zwischen der Spannstellung (siehe z.B. Figur 14) und der Freigabestellung (siehe beispielsweise Figur 13) setzte sich, ausgehend von der Spannstellung, aus einem in Längsrichtung 17 verlaufenden Längsabschnitt und einem in Umfangsrichtung zur Haltefläche 44 verlaufenden Drehabschnitt zusammen.

Der Keilelementanordnung 28, d.h. beim Ausführungsbeispiel der Innenhülse 29, ist mindestens eine feststehende Führungsbahn 46, 47 und ein von außen her betätigbares Betätigungselement 48 zugeordnet, so dass die Innenhülse 29 durch Betätigen des Betätigungselements 48 entlang der mindestens einen Führungsbahn 46, 47 aus ihrer unteren Spannstellung in die obere und verdrehte Freigabestellung bewegt werden kann. Jede Führungsbahn 46, 47 weist einen L-artigen Verlauf mit einem sich in Längsrichtung 17 erstreckenden Längsabschnitt 49 und einem sich in Umfangsrichtung erstreckenden, der Freigabestellung zugeordneten Haltebereich 50 auf, der die Haltefläche 44 bildet.

Zweckmäßigerweise sind zwei einander entgegengesetzte Führungsbahnen 46, 47 vorhanden, so dass die Innenhülse 29 an zwei Stellen geführt wird.

Die Führungsbahnen 46, 47 sind an einer feststehenden, die Innenhülse 29 umschließenden Außenhülse 51 angeordnet und werden jeweils von einem die Wandung der Außenhülse 51 von innen nach außen durchsetzenden Führungsschlitz 52, 53 gebildet. Dabei ist jedem Führungsschlitz 52, 53 ein von der Keilelementanordnung 28, d.h. von der Innenhülse 29 abstehender, in dem Führungsschlitz 52, 53 gelagerter Führungsvorsprung 54, 55 zugeordnet.

Ferner wird das Betätigungselement 48 von einer die Außenhülse 51 umschließenden, verdrehbar angeordneten Betätigungshülse 56 gebildet. Dabei steht der jeweilige Führungsvorsprung 54, 55 nach außen vor die Außenhülse 51 vor und steht mit einer an der Betätigungshülse 56 angeordneten Steuerkurve 57, 58 in Eingriff, so dass beim durch den Benutzer erfolgenden Verdrehen der Betätigungshülse 56 deren Drehbewegung in eine Bewegung des mindestens einen Führungsvorsprungs 54, 55 entlang der Führungsbahn 46, 47 der Außenhülse 51 umgesetzt wird.

Die in der Führungsbahn 46, 47 der Außenhülse laufende Partie 59, 60 des Führungsvorsprungs 54, 55 weist eine im Wesentlichen quaderförmige Gestalt auf. Die der Steuerkurve 57, 58 der Betätigungshülse 56 zugeordnete Partie 61, 62 des Führungsvorsprungs 54, 55 ist im Wesentlichen zylindrisch und steht von der quaderförmigen Partie 59, 60 ab.

Die beiden Steuerkurven 57, 58 der Betätigungshülse 56 weisen einen solchen Verlauf auf, dass bei einem Verdrehen der Betätigungshülse 56 im Zusammenwirken mit den Führungsbahnen 46, 47 der Außenhülse 51 die Innenhülse 29, ausgehend von der Spannstellung, zunächst in Längsrichtung 17 angehoben und dann in die Freigabestellung verdreht wird.

Die Steuerkurven 57, 58 werden zweckmäßigerweise jeweils von einer am Innenumfang der Betätigungshülse 56 angeordneten Steuernut 63, 64 gebildet.

Die Betätigungshülse 56 ist geschlossen ausgebildet und deckt insbesondere die Führungsschlitze 52, 53 der Außenhülse 51 ab, so dass kein Schmutz oder Staub von außen her eindringen kann.

Zur leichtgängigen drehbaren Lagerung der Betätigungshülse 56 an der Außenhülse 51 kann die Betätigungshülse 56 über mehrere über den Umfang verteilte, zweckmäßigerweise in Längsrichtung verlaufende Lagerrippen an der Außenhülse anliegen.

Wie aus der Zeichnung ferner hervorgeht, erstreckt sich die Betätigungshülse 56 im Wesentlichen über die gesamte Länge der Außenhülse 51.

Die Außenhülse 51 ist Teil eines starr mit der Hubstange 4 verbundenen Gehäuses 65 der Spanneinrichtung 6. Das Gehäuse 65 enthält einen die Keilelementanordnung 28, d.h. die Innenhülse 29, und die Spannbackenanordnung 22, 23 aufnehmenden Innenraum 66, der an seiner der Hubstange 4 zugewandten Oberseite durch eine starr mit der Hubstange 4 verbundene Oberwand 67 und an seiner entgegengesetzten Unterseite durch eine starr mit der Außenhülse 51 verbundene Bodenwand 68 abgeschlossen ist. Die Bodenwand 68 weist eine das Verdrehen des Sägeblattes 7 zulassende Durchtrittsausnehmung 69 für das Sägeblatt 7 auf. Beispielsweise aus den Figuren 4 und 5 geht die Gestalt der Durchtrittsausnehmung 69 im Einzelnen hervor. Die Durchtrittsausnehmung 69 weist in der der verdrehten Freigabestellung entsprechenden Richtung eine solche Länge auf, dass der Einspannschaft 16 des Sägeblattes 7 einschließlich der Anschlagvorsprünge 20, 21 hindurchpasst (Figur 4). In der der Spannstellung entsprechenden Richtung ist die Durchtrittsausnehmung 69 kürzer, so dass das Sägeblatt 7 nicht herausgezogen werden kann sondern mit seinen Anschlagvorsprüngen 20, 21 neben der Durchtrittsausnehmung 69 an der dem Innenraum 66 zugewandten Innenfläche der Bodenwand 68 aufsitzt, die die bereits erwähnte Anschlagfläche 45 bildet (Figur 5). Das Sägeblatt 7 wird durch die erste Federeinrichtung 38 gegen die Bodenwand-Innenfläche gehalten.

Die Bodenwand 68 ist zweckmäßigerweise einstückig mit der Außenhülse 51 verbunden.

Die Oberwand 67 wird beim Ausführungsbeispiel von einem mit der Außenhülse 51 beispielsweise durch Schweißen starr verbundenen Abschlussring 70 und einem bis zum Innenumfang des Abschlussrings 70 vorstehenden Ringvorsprung 71 der Hubstange 4 gebildet. Dabei ist der Abschlussring 70 ebenfalls zweckmäßigerweise durch Verschweißen starr mit dem Ringvorsprung 71 verbunden.

Die Betätigungshülse 56 ist in Längsrichtung 17 zwischen radial vorstehenden Lagervorsprüngen 72, 73 des Gehäuses 65 gelagert. Der obere Lagervorsprung 72 kann von dem radial vor die Außenhülse 51 vorstehenden Abschlussring 70 und der untere Lagervorsprung 73 von der ebenfalls radial vor die Außenhülse 51 vorstehenden Bodenwand 68 gebildet werden.

Die zweite Federeinrichtung 42, die sich unten gegen die Keilelementanordnung 28 bzw. die Innenhülse 29 abstützt, kann oben an der Gehäuse-Oberwand 67 abgestützt sein, im dargestellten Falle an dem Ringvorsprung 71 der Hubstange 4.

Die Hubstange 4 weist einen in den Innenraum 66 des Gehäuses 65 ragenden Fortsatz 74 auf. Die die zweite Federeinrichtung 42 bildende Schraubenfeder 43 umschließt diesen Fortsatz 74 und ist somit auf diesem gelagert.

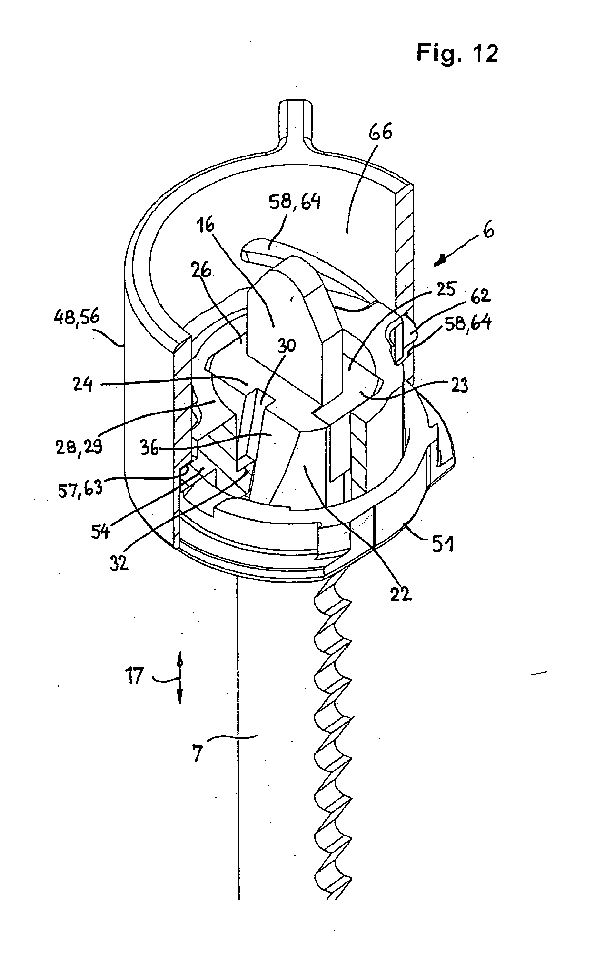

In Figur 12 wurden die Hubstange 4, die Oberwand 67 und die beiden Federeinrichtungen 38, 42 nicht eingezeichnet, so dass der Betrachter einen freien Blick auf die sonstigen Bestandteile der Spanneinrichtung hat.

Somit ergibt sich zusammenfassend, dass das Sägeblatt 7 in der insbesondere aus Figur 4 hervorgehenden Drehlage durch die Durchtrittsausnehmung 69 eingesteckt wird und zwischen die beiden Spannbacken 22, 23 gelangt, die sich zusammen mit der die Keilelementanordnung bildenden Innenhülse 29 in der entsprechend verdrehten Freigabestellung befinden. Diese Freigabestellung wurde zuvor durch Verdrehen der Betätigungshülse 56 und die damit verbundene Verstellung der Innenhülse 29 in Längsrichtung und anschließend in Umfangsrichtung eingestellt. Anschließend verdreht der Benutzer das Sägeblatt 7 in seine Arbeitsstellung (Figur 5). Dabei wird die Innenhülse 29 und von dieser die Spannbackenanordnung 22, 23 mitgenommen. Dadurch kommen die Führungsvorsprünge 54, 55 von dem sich in Umfangsrichtung erstreckenden Haltebereich 50 der Führungsbahnen 46, 47 der Außenhülse 51 frei, so dass sich die Innenhülse 29 unter der von der zweiten Federeinrichtung 42 aufgebrachten Kraft nach unten in die Spannstellung verlagert und dabei die Spannbacken 22, 23 gegen den Einspannschaft 16 des Sägeblattes 7 spannt. Die Anschlagvorsprünge 20, 21 des Einspannschafts 16 werden durch die erste Federeinrichtung 38 gegen die Bodenwand 68 gehalten. Will man das Sägeblatt 7 entnehmen, verdreht man die Betätigungshülse 56, so dass die Innenhülse 29 wieder in ihre obere, verdrehte Freigabestellung gelangt, in der die Spannbacken 22, 23 vom Einspannschaft 16 gelöst sind. Das Sägeblatt 7 nimmt dann die verdrehte Lage gemäß Figur 4 ein und wird durch die erste Federeinrichtung 38 durch die Durchtrittsausnehmung 69 ausgeworfen.

Der Drehwinkel zwischen der Spannstellung und der Freigabestellung liegt zweckmäßigerweise im Bereich von etwa 30°.

## Patentansprüche

1. Hubsäge, insbesondere Stichsäge, mit einer beim Betrieb eine hin und her gehende Hubbewegung ausführenden Hubstange, an deren unterem Ende eine Spanneinrichtung (6) zum lösbaren Festspannen des Einspannschaftes (16) eines im befestigten Zustand unten aus der Spanneinrichtung (6) vorstehenden Sägeblattes (7) angeordnet ist, das von unten her in Längsrichtung (17) in die Spanneinrichtung (6) einsteckbar und nach unten hin aus der Spanneinrichtung (6) entnehmbar ist, wobei die Spanneinrichtung (6) eine beweglich gelagerte Spannbackenanordnung (22, 23) und eine mit der Spannbackenanordnung (22, 23) zusammenwirkende Keilelementanordnung (28) aufweist, **dadurch gekennzeichnet, dass** die Spannbackenanordnung (22, 23) seitlich gegen den Einspannschaft (16) spannbar ist und die Keilelementanordnung (28) der Spannbackenanordnung (22, 23) außen benachbart ist, und dass die die Spanneinrichtung (6) eine erste Federeinrichtung (38), deren Federkraft das eingesetzte Sägeblatt (7) nach unten hin beaufschlagt, und eine zweite Federeinrichtung (42), deren Federkraft die Keilelementanordnung (28) nach unten hin beaufschlagt, enthält, wobei die Keilelementanordnung (28) in Drehmitnahmeverbindung mit der Spannbackenanordnung (22, 23) steht und von außen her zwischen einer unteren, die Spannbackenanordnung (22, 23) nach innen gegen den Einspannschaft (16) spannenden Spannstellung und einer oberen, die Spannbackenanordnung (22, 23) freigebenden Freigabestellung, in der die Keilelementanordnung (28) eine mit Bezug auf die Spannstellung verdrehte Drehlage einnimmt und an einer feststehenden, die Keilelementanordnung (28) in der Freigabestellung haltenden Haltefläche (44) aufsitzt, bewegbar ist und wobei eine feststehende Anschlagfläche (45) vorhanden ist, der eine Anschlaganordnung (20, 21) am Einspannschaft (16) zugeordnet ist, so dass bei eingespanntem Einspannschaft (16) die Anschlaganordnung (20, 21) durch die erste Federeinrichtung (38) nach unten hin gegen die Anschlagfläche (45) gehalten wird und bei in der verdrehten Freigabestellung befindlicher Keilelementanordnung (28) und Spannbackenanordnung (22, 23) der Einspannschaft (16) an der Anschlagfläche (45) vorbeibewegt werden kann.

2. Hubsäge nach Anspruch 1, **dadurch gekennzeichnet, dass** die Spannbackenanordnung (22, 23) von entgegengesetzten Seiten her gegen den zwischen die beiden Spannbacken (22, 23) eingesetzten Einspannschaft (16) spannbare Spannbacken (22, 23) aufweist.

3. Hubsäge nach Anspruch 1 oder 2, **dadurch gekennzeichnet, dass** die Keilelementanordnung (28) und die Spannbackenanordnung (22, 23) einander zugeordnete Keilflächen (34, 35, 36, 37) aufweisen, über die die Spannkraft aufgebracht wird.

4. Hubsäge nach einem der Ansprüche 1 bis 3, **dadurch gekennzeichnet, dass** die Keilelementanordnung (28) von einer die Spannbackenanordnung (22, 23) umschließenden Innenhülse (29) gebildet wird.

5. Hubsäge nach einem der Ansprüche 1 bis 4, **dadurch gekennzeichnet, dass** die Keilelementanordnung (28) in Drehmitnahmeeingriff mit der Spannbackenanordnung (22, 23) steht und unter Beibehaltung des Drehmitnahmeeingriffs in Längsrichtung (17) relativ zur Spannbackenanordnung (22, 23) bewegbar ist.

6. Hubsäge nach einem der Ansprüche 1 bis 5, **dadurch gekennzeichnet, dass** sich der Bewegungsweg der Keilelementanordnung (28) zwischen der Spannstellung und der Freigabestellung, ausgehend von der Spannstellung, aus einem in Längsrichtung (17) verlaufenden Längsabschnitt und einem in Umfangsrichtung zur Haltefläche (44) verlaufenden Drehabschnitt zusammensetzt.

7. Hubsäge nach einem der Ansprüche 1 bis 6, **dadurch gekennzeichnet, dass** der Keilelementanordnung (28) mindestens eine feststehende Führungsbahn (46, 47) und ein von außen her betätigbares Betätigungselement (48) zugeordnet ist, so dass die Keilelementanordnung (28) durch Betätigen des Betätigungselements (48) entlang der mindestens einen Führungsbahn (46, 47) aus ihrer Spannstellung in die Freigabestellung bewegt wird.

8. Hubsäge nach Anspruch 6 und Anspruch 7, **dadurch gekennzeichnet, dass** die mindestens eine Führungsbahn (46, 47) einen L-artigen Verlauf aufweist.

9. Hubsäge nach Anspruch 7 oder 8, **dadurch gekennzeichnet, dass** die mindestens eine Führungsbahn (46, 47) einen der Freigabestellung zugeordneten Haltebereich (50) bildet und die Haltefläche (44) von dem mindestens einen Haltebereich (50) gebildet wird.

10. Hubsäge nach einem der Ansprüche 7 bis 9, **dadurch gekennzeichnet, dass** die mindestens eine Führungsbahn (46, 47) an einer feststehenden, die Keilelementanordnung (28) umschließenden Außenhülse (51) angeordnet ist und von einem die Wandung der Außenhülse (51) von innen nach außen durchsetzenden Führungsschlitz (52, 53) gebildet wird, wobei jedem Führungsschlitz (52, 53) ein von der Keilelementanordnung (28) abstehender, in den Führungsschlitz (52, 53) gelagerter Führungsvorsprung (54, 55) zugeordnet ist.

11. Hubsäge nach Anspruch 10, **dadurch gekennzeichnet, dass** das Betätigungselement (48) von einer die Außenhülse (51) umschließenden, verdrehbar angeordneten Betätigungshülse (56) gebildet wird, wobei der mindestens eine Führungsvorsprung (54, 55) nach außen vor die Außenhülse (51) vorsteht und mit einer an der Betätigungshülse (56) angeordneten Steuerkurve (57, 58) in Eingriff steht, so dass beim Verdrehen der Betätigungshülse (56) deren Drehbewegung in eine Bewegung des mindestens einen Führungsvorsprungs (54, 55) entlang der Führungsbahn (46, 47) der Außenhülse (51) umgesetzt wird.

12. Hubsäge nach Anspruch 11, **dadurch gekennzeichnet, dass** die mindestens eine Steuerkurve (57, 58) von einer an der Betätigungshülse (56) angeordneten Steuernut (63, 64) gebildet wird.

13. Hubsäge nach einem der Ansprüche 10 bis 12, **dadurch gekennzeichnet, dass** die Außenhülse (51) Teil eines starr mit der Hubstange (4) verbundenen Gehäuses (65) der Spanneinrichtung (6) ist.

14. Hubsäge nach Anspruch 13, **dadurch gekennzeichnet, dass** das Gehäuse (65) einen die Keilelementanordnung (28) und die Spannbackenanordnung (22, 23) aufnehmenden Innenraum (66) enthält, der an seiner der Hubstange (4) zugewandten Oberseite durch eine fest mit der Hubstange (4) verbundene Oberwand (67) und an seiner entgegengesetzten Unterseite durch eine fest mit der Außenhülse (51) verbundene Bodenwand (68) abgeschlossen ist, wobei die Bodenwand (68) eine das Verdrehen des Sägeblattes (7) zulassende Durchtrittsausnehmung (69) für das Sägeblatt (7) aufweist.

15. Hubsäge nach Anspruch 14, **dadurch gekennzeichnet, dass** die Bodenwand (68) einstückig mit der Außenhülse (51) verbunden ist.

16. Hubsäge nach Anspruch 14 oder 15, **dadurch gekennzeichnet, dass** die Anschlagfläche (45), gegen die der Einspannschaft (16) des Sägeblattes (7) durch die erste Federeinrichtung (38) gehalten wird, von der Innenfläche der Bodenwand (68) gebildet wird.

17. Hubsäge nach einem der Ansprüche 11 bis 16, **dadurch gekennzeichnet, dass** sich die Betätigungshülse (56) im Wesentlichen über die gesamte Länge der Außenhülse (51) erstreckt und zwischen radial vorstehenden Lagervorsprüngen (72, 73) des Gehäuses (65) gelagert ist.

18. Hubsäge nach einem der Ansprüche 1 bis 17, **dadurch gekennzeichnet, dass** die erste Federeinrichtung (38) und/oder die zweite Federeinrichtung (42) von einer Schraubenfeder (39, 43) gebildet wird.

19. Hubsäge nach Anspruch 18, **dadurch gekennzeichnet, dass** die die erste Federeinrichtung (38) bildende Schraubenfeder (39) in der Hubstange (4) gelagert ist und sich einerseits gegen die Hubstange (4) und andererseits an einem stirnseitig gegen das Sägeblatt (7) wirkenden Druckstück (41) abstützt.

20. Hubsäge nach Anspruch 18 oder 19, **dadurch gekennzeichnet, dass** die die zweite Federeinrichtung (42) bildende Schraubenfeder (43) sich einerseits gegen die Oberwand (65) des Gehäuses (65) und andererseits gegen die Keilelementanordnung (28) abstützt.

21. Hubsäge nach Anspruch 20, **dadurch gekennzeichnet, dass** die die zweite Federeinrichtung (42) bildende Schraubenfeder (43) auf einem in das Gehäuse (65) ragenden Fortsatz (74) der Hubstange (4) gelagert ist.

## Claims

1. Hacksaw, in particular jig saw, with a lifting rod executing a stroke moving to and fro in operation and at the lower end of which is a clamping fixture (6) for the releasable clamping of the clamping shank (16) of a saw blade (7) which protrudes downwards from the clamping fixture (6) in the fitted state and which may be inserted into the clamping fixture (6) from below in the axial direction (17) and may be removed downwards from the clamping fixture (6), wherein the clamping fixture (6) has a movably mounted clamping jaw assembly (22, 23) and a wedge element assembly (28) working in conjunction with the clamping jaw assembly (22, 23), **characterised in that** the clamping jaw assembly (22, 23) may be clamped against the side of the clamping shank (16) and the wedge element assembly (28) is adjacent to the outside of the clamping jaw assembly (22, 23), and that the clamping fixture (6) contains a first spring device (38), the spring force of which acts downwards on the inserted saw blade (7), and a second spring device (42), the spring force of which acts downwards on the wedge element assembly (28), wherein the wedge element assembly (28) is in rotary driving connection with the clamping jaw assembly (22, 23) and may be moved from the outside between a lower clamping position in which it clamps the clamping jaw assembly (22, 23) inwards against the clamping shank (16), and an upper release position releasing the clamping jaw assembly (22, 23) and in which the wedge element assembly (28) adopts a rotated position relative to the clamping position and rests on a stationary holding surface (44) which holds the wedge element assembly (28) in the release position, and wherein there is provided a stationary stop face (45) assigned to a stop assembly (20, 21) on the clamping shank (16), so that with the clamping shank (16) clamped, the stop assembly (20, 21) is held downwards by the first spring device (38) against the stop face (45) and, with the wedge element assembly (28) and clamping jaw assembly (22, 23) in the rotated release position, the clamping shank (16) may be moved past the stop face (45).

2. Hacksaw according to claim 1, **characterised in that** the clamping jaw assembly (22, 23) has clamping jaws (22, 23) which may be clamped from opposite sides against the clamping shank (16) inserted between the two clamping jaws (22, 23).

3. Hacksaw according to claim 1 or 2, **characterised in that** the wedge element assembly (28) and the clamping jaw assembly (22, 23) have wedge surfaces (34, 35, 36, 37) assigned to one another, through which the clamping force is applied.

4. Hacksaw according to any of claims 1 to 3, **characterised in that** the wedge element assembly (28) is formed by an inner sleeve (29) encompassing the clamping jaw assembly (22, 23).

5. Hacksaw according to any of claims 1 to 4, **characterised in that** the wedge element assembly (28) is in rotary driving engagement with the clamping jaw assembly (22, 23) and may be moved in the axial direction (17) relative to the clamping jaw assembly (22, 23) while retaining the rotary driving engagement.

6. Hacksaw according to any of claims 1 to 5, **characterised in that** the movement path of the wedge element assembly (28) between the clamping position and the release position, starting from the clamping position, is comprised of a longitudinal section running in the axial direction (17) and a rotary section running in the circumferential direction to the holding surface (44).

7. Hacksaw according to any of claims 1 to 6, **characterised in that** the wedge element assembly (28) is assigned at least one stationary guideway (46, 47) and an actuating element (48) actuable from the outside, so that the wedge element assembly (28) is moved by actuation of the actuating element (48) along the guideway or guideways (46, 47) from its clamping position into the release position.

8. Hacksaw according to claim 6 and claim 7, **characterised in that** the guideway or guideways (46, 47) has or have an L-shaped course.

9. Hacksaw according to claim 7 or 8, **characterised in that** the guideway or guideways (46, 47) form a holding section (50) assigned to the release position and the holding surface (44) is formed by the holding section or sections (50).

10. Hacksaw according to any of claims 7 to 9, **characterised in that** the guideway or guideways (46, 47) is or are mounted on a stationary outer sleeve (51) encompassing the wedge element assembly (28), being formed by a guide slot (52, 53) passing through the wall of the outer sleeve (51) from inside to outside, wherein each guide slot (52, 53) is assigned a guide projection (54, 55) mounted in the guide slot (52, 53) and protruding from the wedge element assembly (28).

11. Hacksaw according to claim 10, **characterised in that** the actuating element (48) is formed by a rotatably mounted actuating sleeve (56) which encompasses the outer sleeve (51), wherein the guide projection or projections (54, 55) protrude(s) outwards in front of the outer sleeve (51) and engage(s) with a control cam (57, 58) mounted on the actuating sleeve (56) so that, on rotation of the actuating sleeve (56), its rotary movement is converted into a movement of the guide projection or projections (54, 55) along the guideway (46, 47) of the outer sleeve (51).

12. Hacksaw according to claim 11, **characterised in that** the control cam or cams (57, 58) is or are formed by a control groove (63, 64) provided on the actuating sleeve (56).

13. Hacksaw according to any of claims 10 to 12, **characterised in that** the outer sleeve (51) is part of a housing (65) of the clamping fixture (6) connected rigidly to the lifting rod (4).

14. Hacksaw according to claim 13, **characterised in that** the housing (65) contains an interior (66), accommodating the wedge element assembly (28) and the clamping jaw assembly (22, 23), which is closed at its upper side facing the lifting rod (4) by a top panel (67) connected firmly to the lifting rod (4), and at its opposite lower side by a bottom panel (68) connected firmly to the outer sleeve (51), wherein the bottom panel (68) has a through recess (69) for the saw blade (7) allowing rotation of the saw blade (7).

15. Hacksaw according to claim 14, **characterised in that** the bottom panel (68) is joined integrally to the outer sleeve (51).

16. Hacksaw according to claim 14 or 15, **characterised in that** the stop face (45) against which the clamping shank (16) of the saw blade (7) is held by the first spring device (38) is formed by the inner surface of the bottom panel (68).

17. Hacksaw according to any of claims 11 to 16, **characterised in that** the actuating sleeve (56) extends substantially over the whole length of the outer sleeve (51) and is mounted between radially protruding bearing projections (72, 73) of the housing (65).

18. Hacksaw according to any of claims 1 to 17, **characterised in that** the first spring device (38) and/or the second spring device (42) is or are formed by a coil spring (39, 43).

19. Hacksaw according to claim 18, **characterised in that** the coil spring (39) forming the first spring device (38) is mounted in the lifting rod (4), resting at one end against the lifting rod (4) and at the other end on a pressure element (41) acting on the face of the saw blade (7).

20. Hacksaw according to claim 18 or 19, **characterised in that** the coil spring (43) forming the second spring device (42) rests at one end against the top panel (65) of the housing (65) and at the other end against the wedge element assembly (28).

21. Hacksaw according to claim 20, **characterised in that** the coil spring (43) forming the second spring device (42) is mounted on an extension (74) of the lifting rod (4) which extends into the housing (65).

## Revendications

1. Scie à mouvement alternatif, en particulier scie sauteuse, comprenant une tige de levage effectuant un mouvement alternatif de va-et-vient lors du fonctionnement, au niveau de l'extrémité inférieure de laquelle est disposé un dispositif de serrage (6) servant à serrer de manière amovible la tige de serrage (16) d'une lame de scie (7) faisant saillie en bas du dispositif de serrage (6) à l'état fixé, laquelle lame de scie peut être insérée depuis le bas dans la direction longitudinale (17) dans le dispositif de serrage (6) et peut être retirée par le bas du dispositif de serrage (6), sachant que le dispositif de serrage (6) présente un ensemble de mâchoires de serrage (22, 23) logé de manière mobile et un ensemble d'éléments de calage (28) coopérant avec l'ensemble de mâchoires de serrage (22, 23), **caractérisée en ce que** l'ensemble de mâchoires de serrage (22, 23) peut être serré sur le côté contre la tige de serrage (16), et **en ce que** l'ensemble d'éléments de calage (28) se trouve à proximité, à l'extérieur de l'ensemble de mâchoires de serrage (22, 23), et **en ce que** le dispositif de serrage (6) comprend une premier dispositif de ressort (38), dont l'effet ressort exerce une action sur la lame de scie (7) utilisée vers le bas, et un deuxième dispositif de ressort (42), dont l'effet ressort exerce une action vers le bas sur l'ensemble d'éléments de calage (28), sachant que l'ensemble d'éléments de calage (28) se trouve en liaison d'entraînement en rotation avec l'ensemble de mâchoires de serrage (22, 23) et qu'il peut être déplacé depuis l'extérieur entre une position de serrage inférieure, serrant l'ensemble de mâchoires de serrage (22, 23) vers l'intérieur contre la tige de serrage (16) et une position de desserrage supérieure libérant l'ensemble de mâchoires de serrage (22, 23), dans laquelle l'ensemble d'éléments de calage (28) prend une position rotative tournée par rapport à la position de serrage et repose sur une surface de retenue (44) immobile maintenant l'ensemble d'éléments de calage (28) dans la position de desserrage, et sachant qu'une surface de butée (45) immobile est présente, à laquelle est associé un ensemble de butées (20, 21) au niveau de la tige de serrage (16), de sorte que lorsque la tige de serrage (16) est serrée, l'ensemble de butées (20, 21) est maintenu contre la surface de butée (45) par le premier dispositif de ressort (38) en direction du bas et que la tige de serrage (16) peut être déplacée le long de la surface de butée (45) lorsque l'ensemble d'éléments de calage (28) et l'ensemble de mâchoires de serrage (22, 23) se trouvent dans la position de serrage tournée.

2. Scie à mouvement alternatif selon la revendication 1, **caractérisée en ce que** l'ensemble de mâchoires de serrage (22, 23) présente depuis des côtés opposés des mâchoires de serrage (22, 23) pouvant être serrées contre la tige de serrage (16) utilisée entre les deux mâchoires de serrage (22, 23).

3. Scie à mouvement alternatif selon la revendication 1 ou 2, **caractérisée en ce que** l'ensemble d'éléments de calage (28) et l'ensemble de mâchoires de serrage (22, 23) présentent des surfaces de calage (34, 35, 36, 37) associées les unes aux autres, par l'intermédiaire desquelles est appliquée la force de serrage.

4. Scie à mouvement alternatif selon l'une quelconque des revendications 1 à 3, **caractérisée en ce que** l'ensemble d'éléments de calage (28) est formé par une douille intérieure (29) entourant l'ensemble de mâchoires de serrage (22, 23).

5. Scie à mouvement alternatif selon l'une quelconque des revendications 1 à 4, **caractérisée en ce que** l'ensemble d'éléments de calage (28) se trouve en prise d'entraînement en rotation avec l'ensemble de mâchoires de serrage (22, 23) et peut être déplacé par rapport à l'ensemble de mâchoires de serrage (22, 23) dans la direction longitudinale (17) en maintenant l'engrènement d'entraînement en rotation.

6. Scie à mouvement alternatif selon l'une quelconque des revendications 1 à 5, **caractérisée en ce que** le trajet de déplacement de l'ensemble d'éléments de calage (28) entre la position de serrage et la position de desserrage, en partant de la position de serrage est composé d'une section longitudinale s'étendant dans la direction longitudinale (17) et d'une section rotative s'étendant dans la direction périphérique par rapport à la surface de retenue (44).

7. Scie à mouvement alternatif selon l'une quelconque des revendications 1 à 6, **caractérisée en ce qu'**au moins une glissière de guidage (46, 47) immobile et un élément d'actionnement (48) pouvant être actionné depuis l'extérieur sont associés à l'ensemble d'éléments de calage (28) de sorte que l'ensemble d'éléments de calage (28) est déplacé depuis sa position de serrage dans la position de desserrage, le long de la glissière de guidage (46, 47) au moins au nombre de une en actionnant l'élément d'actionnement (48).

8. Scie à mouvement alternatif selon la revendication 6 et la revendication 7, **caractérisée en ce que** la glissière de guidage (46, 47) au moins au nombre de une présente un tracé en forme de L.

9. Scie à mouvement alternatif selon la revendication 7 ou 8, **caractérisée en ce que** la glissière de guidage (46, 47) au moins au nombre de une forme une zone de retenue (50) associée à la position de desserrage, et **en ce que** la surface de retenue (44) est formée par la zone de retenue (50) au moins au nombre de une.

10. Scie à mouvement alternatif selon l'une quelconque des revendications 7 à 9, **caractérisée en ce que** la glissière de guidage (46, 47) au moins au nombre de une est disposée au niveau d'une douille extérieure (51) immobile entourant l'ensemble d'éléments de calage (28) et est formée par une fente de guidage (52, 53) traversant de l'intérieur vers l'extérieur la paroi de la douille extérieure (51), sachant qu'une partie de guidage faisant saillie (54, 55) logée dans la fente de guidage (52, 53), dépassant de l'ensemble d'éléments de calage (28) est associée à chaque fente de guidage (52, 53).

11. Scie à mouvement alternatif selon la revendication 10, **caractérisée en ce que** l'élément d'actionnement (48) est formé par une douille d'actionnement (56) entourant la douille extérieure (51), disposée de manière à pouvoir tourner, sachant que la partie de guidage faisant saillie (54, 55) au moins au nombre de une fait saillie vers l'extérieur de la douille extérieure (51) et se trouve en prise avec une came de commande (57, 58) disposée au niveau de la douille d'actionnement (56) de sorte que lorsque la douille d'actionnement (56) est tournée, le mouvement de rotation de cette dernière se transforme en un mouvement de la partie de guidage faisant saillie (54, 55) au moins au nombre de une le long de la glissière de guidage (46, 47) de la douille extérieure (51).

12. Scie à mouvement alternatif selon la revendication 11, **caractérisée en ce que** la came de commande (57, 58) au moins au nombre de une est formée par une rainure de commande (63, 64) disposée au niveau de la douille d'actionnement (56).

13. Scie à mouvement alternatif selon l'une quelconque des revendications 10 à 12, **caractérisée en ce que** la douille extérieure (51) fait partie d'un boîtier (65), relié de manière rigide à la tige de levage (4), du dispositif de serrage (6).

14. Scie à mouvement alternatif selon la revendication 13, **caractérisée en ce que** le boîtier (65) comprend un espace intérieur (66) logeant l'ensemble d'éléments de calage (28) et l'ensemble de mâchoires de serrage (22, 23), lequel espace intérieur est fermé au niveau de son côté supérieur tourné vers la tige de levage (4) par une paroi supérieure (67) reliée de manière fixe à la tige de levage (4) et au niveau de son côté inférieur opposé par une paroi de fond (68) reliée de manière fixe à la douille extérieure (51), sachant que la paroi de fond (68) présente un évidement de passage (69) pour la lame de scie (7) autorisant la rotation de la lame de scie (7).

15. Scie à mouvement alternatif selon la revendication 14, **caractérisée en ce que** la paroi de fond (68) est reliée d'un seul tenant à la douille extérieure (51).

16. Scie à mouvement alternatif selon la revendication 14 ou 15, **caractérisée en ce que** la surface de butée (45), contre laquelle est maintenue la tige de serrage (16) de la lame de scie (7) par le premier dispositif de ressort (38), est formée par la surface intérieure de la paroi de fond (68).

17. Scie à mouvement alternatif selon l'une quelconque des revendications 11 à 16, **caractérisée en ce que** la douille d'actionnement (56) s'étend essentiellement sur toute la longueur de la douille extérieure (51) et est logée entre des parties de palier faisant saillie (72, 73) du boîtier faisant saillie radialement.

18. Scie à mouvement alternatif selon l'une quelconque des revendications 1 à 17, **caractérisée en ce que** le premier dispositif de ressort (38) et/ou le deuxième dispositif de ressort (42) sont formés par un ressort à boudin (39, 43).

19. Scie à mouvement alternatif selon la revendication 18, **caractérisée en ce que** le ressort à boudin (39) formant le premier dispositif de ressort (38) est logé dans la tige de levage (4) et s'appuie d'un côté contre la tige de levage (4) et de l'autre côté au niveau d'une pièce de pression (41) agissant côté frontal contre la lame de scie (7).

20. Scie à mouvement alternatif selon la revendication 18 ou 19, **caractérisée en ce que** le ressort à boudin formant le deuxième dispositif de ressort (42) s'appuie d'un côté contre la paroi supérieure (65) du boîtier (65) et de l'autre côté contre l'ensemble d'éléments de calage (28).

21. Scie à mouvement alternatif selon la revendication 20, **caractérisée en ce que** le ressort à boudin (43) formant le deuxième dispositif de ressort (42) est logé sur un prolongement (74) de la tige de levage (4), dépassant dans le boîtier (65).
